# EUROPÄISCHE PATENTSCHRIFT

(11) **EP 3 940 227 B1**
(45) Veröffentlichungstag und Bekanntmachung des Hinweises auf die Patenterteilung: **01.05.2024**
(21) Anmeldenummer: 21183321.5
(22) Anmeldetag: 02.07.2021
(51) Int. Cl.: F03D 7/02

(54) **WINDENERGIEANLAGE UND VERFAHREN ZUM BETREIBEN EINER WINDENERGIEANLAGE**
WIND ENERGY SYSTEM AND METHOD FOR OPERATING A WIND ENERGY SYSTEM
ÉOLIENNE ET PROCÉDÉ DE FONCTIONNEMENT D'UNE ÉOLIENNE

(30) Priorität: 03.07.2020 DE 102020004036; 03.07.2020 DE 102020004034; 03.07.2020 DE 102020004035
(43) Veröffentlichungstag der Anmeldung: 19.01.2022
(73) Patentinhaber: Siemens Gamesa Renewable Energy Service GmbH, 20097 Hamburg (DE)
(72) Erfinder: HÖR, Oliver, 24796 Bredenbek (DE); BEHL, Stefan, 24536 Neumünster (DE); WARFEN, Karsten, 23795 Weede/Söhren (DE)
(74) Vertreter: Schlotter, Alexander Carolus Paul

(56) Entgegenhaltungen:
- EP-A2- 1 916 417
- WO-A1-2005/017350
- DE-A1-102010 037 695
- DE-B3-102010 060 380

## Beschreibung

Die vorliegende Erfindung betrifft eine Windenergieanlage, ein Verfahren zum Betreiben einer Windenergieanlage sowie ein Computerprogrammprodukt zur Durchführung des Verfahrens.

Aus betriebsinterner Praxis sind Windenergieanlagen mit winkelverstellbaren Rotorblättern bekannt.

Indem die Rotorblätter in eine Fahnenstellung verstellt werden, in der sie, wenigstens im Wesentlichen, keine Leistung an einer Rotor-Drehachse bzw. -nabe erzeugen, kann insbesondere eine Leistung der Windenergieanlage geregelt und/oder eine Belastung bei (zu) starkem Wind reduziert werden.

Im Normalbetrieb werden Verstellantriebe zum Verstellen der Rotorblätter aus einer Energiequelle, beispielsweise elektromotorische Verstellantriebe aus einem (Strom)Netz oder hydraulische Verstellantriebe aus einem Hydrauliksystem, mit (Antriebs)Energie versorgt.

Aus betriebsinterner Praxis ist es bekannt, bei Ausfall dieser primären Energieversorgung in einem Sonderbetrieb Verstellantriebe stattdessen mit einem Energiespeicher, beispielsweise elektromotorische Verstellantriebe mit einem Akkumulator oder hydraulische Verstellantriebe mit einem (Hydraulik)Druckspeicher, zu verbinden, so dass diese ungeregelt, aber sicher in die Fahnenstellung gedreht werden. Bei Erreichen der Fahnenstellung wird diese Energieversorgung aus dem Energiespeicher abgeschaltet bzw. unterbrochen, beispielsweise bei elektromotorischen Verstellantrieben durch ein Schütz oder bei hydraulischen Verstellantrieben durch ein selbsttätiges Schaltventil. Bei hydraulischen Verstellzylindern als Antrieb kann die Fahnenstellung auch durch einen mechanischen Endanschlag begrenzt sein.

Auf diese Weise können die Rotorblätter bei Ausfall der Energieversorgung aus der Energiequelle in einfacher und damit verlässlicher Weise in ihre Fahnenstellung gedreht, insbesondere dort diese Verstellung (verlässlich) beendet werden.

Die DE 10 2010 060380 B3 betrifft eine notbetriebsfähige Pitchantriebsschaltung für eine Wind- oder Wasserkraftanlage, umfassend zumindest eine Gleichrichtereinheit, zumindest einen DC-Zwischenkreis, zwei Wechselrichtereinheiten und einen Pitch- Drehstrommotor mit beidseitig kontaktierbaren Motorsträngen, wobei eine erste Kontaktseite der Motorstränge mit einer ersten Wechselrichtereinheit und eine zweite Kontaktseite der Motorstränge mit einer zweiten Wechselrichtereinheit verbunden ist, zumindest ein Schaltelement mit zumindest einer Kontaktseite der Motorstränge verbunden ist, wobei in einem Normalbetrieb eines ersten Schaltzustands des Schaltelements die Motorstränge mittels beider Wechselrichtereinheiten bestrombar sind, und in einem Notbetrieb eines zweiten Schaltzustands des Schaltelements die Motorstränge mittels einer einzigen Wechselrichtereinheit bestrombar sind.

Die EP 1 916 417 A2 betrifft eine Ansteuerschaltung und ein Verfahren zum Betrieb einer solchen Ansteuerschaltung für einen Gleichstrommotor mit elektrisch betätigter Haltebremse, insbesondere für die Verstellung eines Rotorblatts einer Wind- oder Wasserkraftanlage, wobei die Ansteuerschaltung eine Notbetriebversorgungseinrichtung und einen Dreibrücken-Wechselrichter umfasst, wobei die Notbetriebversorgungseinrichtung über ein Notbetrieb-Netz-Schaltelement mit dem Zwischenkreis des Dreibrücken-Wechselrichters freischaltbar verbunden ist, der Gleichstrommotor über ein Notbetrieb-Motor-Umschaltelement entweder mit dem Dreibrücken- Wechselrichter oder mit der Notbetriebversorgungseinrichtung verbunden ist, und die Haltebremse über ein Notbetrieb-Bremse- Umschaltelement entweder mit dem Dreibrücken-Wechselrichter oder mit der Notbetriebversorgungseinrichtung verbunden ist.

Aufgabe der vorliegenden Erfindung ist es, den Betrieb einer Windenergieanlage zu verbessern.

Diese Aufgabe wird durch ein Verfahren mit den Merkmalen des Anspruchs 1 gelöst. Ansprüche 9, 16 stellen eine Windenergieanlage bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Windenergieanlage einen Rotor mit wenigstens einem winkelverstellbaren Rotorblatt, das vorliegend ohne Beschränkung der Allgemeinheit als erstes Rotorblatt bezeichnet wird, und einen (entsprechend als erster Verstellantrieb bezeichneten) Verstellantrieb auf, mithilfe dessen, insbesondere durch den, dieses Rotorblatt (winkel)verstellbar ist bzw. (winkel)verstellt wird bzw. der hierzu vorgesehen, insbesondere eingerichtet ist bzw. verwendet wird.

Der Rotor ist in einer Ausführung an einer Gondel der Windenergieanlage um eine, insbesondere horizontale, Rotor-Drehachse drehbar gelagert und in einer Ausführung mit einem Generator zur Umsetzung einer Rotordrehung bzw. -leistung in elektrische Energie, insbesondere zum Einspeisen in ein (Energieversorgungs- bzw. Strom)Netz, gekoppelt. Die Gondel ist in einer Ausführung an einem Turm angeordnet und in einer Ausführung durch einen Gondelantrieb um eine vertikale Gondel-Drehachse drehbar. In einer Ausführung weist der Rotor mehrere, in einer Ausführung drei, winkelverstellbaren Rotorblätter auf, die in einer Ausführung längs eines Umfangs des Rotors verteilt (angeordnet) sind.

Für solche Windenergieanlagen ist die vorliegende Erfindung, insbesondere aufgrund der dabei auftretenden Lasten und Betriebsbedingungen, besonders geeignet, ohne hierauf beschränkt zu sein.

In einer Ausführung sind ein oder mehrere, insbesondere alle, Rotorblätter des Rotors (jeweils) durch einen eigenen Verstellantrieb (winkel)verstellbar.

Hierdurch kann in einer Ausführung die Blattstellung individuell angepasst und dadurch die Sicherheit erhöht und/oder die Leistungsregelung der Windenergieanlage verbessert werden.

Unter einer (Winkel)Verstellung eines Rotorblatts wird vorliegend insbesondere eine Verdrehung des Rotorblatts um eine Rotorblatt-Drehachse verstanden, welche sich in Längsrichtung des Rotorblatts und/oder quer zur Rotor-Drehachse erstreckt. Sofern vorliegend von einem Verstellen bzw. einer Stellung gesprochen wird, kann dies (jeweils) ein Verdrehen bzw. eine Winkelstellung bzw. -lage um die Rotorblatt-Drehachse sein.

Nach einer Ausführung der vorliegenden Erfindung weist die Windenergieanlage eine Sicherheitssteuerung auf. Diese ist in einer Ausführung vollständig oder teilweise redundant, in einer Ausführung vollständig oder teilweise diversitär, in einer Ausführung weist sie wenigstens eine(n) SLC auf. In einer Ausführung handelt es sich bei der SLC um eine Sicherheitssteuerung gemäß IEC 61508/IEC61511 mit Sicherheits-Integritätslevel (SIL) SIL2 oder SIL3, welche in einer Ausführung in der Rotornabe der Windenergieanlage angeordnet ist.

Hierdurch kann in einer Ausführung trotz nachfolgend erläuterter Abkehr von bekannten Sicherheitskonzepten deren Sicherheitsniveau bzw. -stufe realisiert werden.

Nach einer Ausführung der vorliegenden Erfindung weist die Windenergieanlage eine erste Umkehreinrichtung auf, über die der erste Verstellantrieb aus einer Energiequelle mit (Antriebs)Energie
- wenigstens temporär derart versorgt wird, dass er (in einem ersten Zustand der ersten Umkehreinrichtung) das erste Rotorblatt in einer ersten Richtung verstellt; und
- wenigstens temporär derart versorgt wird, dass er (in einem zweiten Zustand der ersten Umkehreinrichtung) das erste Rotorblatt in einer zu der ersten Richtung gegensinnigen zweiten Richtung verstellt,
bzw. ist die erste Umkehreinrichtung derart bzw. hierzu vorgesehen, insbesondere eingerichtet bzw. wird hierzu verwendet.

Diese erste Umkehreinrichtung weist in einer Ausführung einen oder mehrere Umrichter und/oder ein oder mehrere Schaltventile auf.

Auf diese Weise kann in einer Ausführung in einem Normalbetriebsmodus das Rotorblatt winkelverstellt und dadurch eine Leistung der Windenergieanlage geregelt und/oder eine Belastung bei (zu) starkem Wind reduziert werden.

Nach einer Ausführung der vorliegenden Erfindung weist die Windenergieanlage eine zweite Umkehreinrichtung auf, die durch die Sicherheitssteuerung in eine erste und eine zweite Schaltstellung umschaltbar ist bzw. umgeschaltet wird und über die der erste Verstellantrieb in wenigstens einem Sonderbetriebsmodus, der vorliegend ohne Beschränkung der Allgemeinheit als erster Sonderbetriebsmodus bezeichnet wird, aus einem (von der Energiequelle verschiedenen) Energiespeicher mit (Antriebs)Energie
- wenigstens temporär derart versorgt wird, dass er in der ersten Schaltstellung der zweiten Umkehreinrichtung das erste Rotorblatt in der ersten Richtung verstellt; und
- wenigstens temporär derart versorgt wird, dass er in der zweiten Schaltstellung der zweiten Umkehreinrichtung das erste Rotorblatt in der zweiten Richtung verstellt,
bzw. ist die zweite Umkehreinrichtung derart bzw. hierzu vorgesehen, insbesondere eingerichtet bzw. wird hierzu verwendet.

In einer Ausführung verbindet die zweite Umkehreinrichtung, insbesondere hierzu bzw. zur Realisierung der ersten bzw. zweiten (Verstell)Richtung, in der ersten Schaltstellung einen ersten Eingang mit einem ersten Ausgang sowie einen zweiten Eingang mit einem zweiten Ausgang und in einer zweiten Schaltstellung den ersten Eingang mit dem zweiten Ausgang sowie den zweiten Eingang mit dem ersten Ausgang bzw. ist hierzu vorgesehen, insbesondere eingerichtet bzw. wird derart verwendet. Hierdurch kann in einer Ausführung eine einfache und/oder zuverlässige Umkehrung der Verstellrichtung realisiert werden.

Dem liegt eine bewusste Abkehr von bisherigen Sicherheitskonzepten zugrunde, die eine einzige, feste Verstellrichtung in einem Sonderbetriebsmodus vorsehen, in dem der Verstellantrieb nicht regulär über die erste Umkehreinrichtung, sondern (direkt) über die zweite Umkehreinrichtung mit Energie versorgt wird und dadurch (ungeregelt) in der festen Verstellrichtung bis in eine Haltestellung verstellt wird, in der diese Verstellung durch Unterbrechung der Energieversorgung über die zweite Verbindung dann unterbrochen wird.

Dafür gewinnt man durch die vorliegende Erfindung, die sozusagen eine "Umpolung" der (direkten) Energieversorgung aus dem Energiespeicher über die zweite Umkehreinrichtung realisiert, erstmals die Möglichkeit, auch bei einer Störung der Energieversorgung über die erste Umkehreinrichtung, insbesondere (auch) bei einer (Funktions)Störung der ersten Umkehreinrichtung selber, also beispielsweise eines Umrichters, Schaltventils oder eines diesen bzw. dieses steuernden (Pitch)Reglers, das Rotorblatt in zwei gegensinnige Richtungen zu verstellen.

Dadurch kann in einer Ausführung ein, gegebenenfalls eingeschränkter, energieerzeugender, insbesondere energieeinspeisender Betrieb der Windenergieanlage auch bei einer solchen Störung aufrechterhalten, insbesondere mithilfe der zweiten Umkehreinrichtung eine, gegebenenfalls eingeschränkte, Anpassung der Rotorblattstellung an verschiedene Umgebungsbedingungen, insbesondere Windgeschwindigkeiten, durchgeführt werden, insbesondere das Rotorblatt bei schwächer werdendem Wind (wieder) von einer Stellung, in der es weniger Auftrieb bzw. eine geringere Leistung an dem Rotor erzeugt, in eine Stellung verstellt werden, in der es mehr Auftrieb bzw. eine größere Leistung an dem Rotor erzeugt.

Dies ist insbesondere dann von großem Vorteil, wenn sich eine Reparatur der Störung verzögert, insbesondere bei Offshore-Windenergieanlagen.

Zusätzlich oder alternativ kann hierdurch in einer Ausführung ein Rotorblatt, dass im ersten Sonderbetriebsmodus eine Halte-, insbesondere Fahnenstellung angefahren hat und in dieser trotz einer geschlossenen Pitch-Bremse in Anfahrrichtung weiterrutscht, nach Umkehrung der Verstellrichtung wieder in die Haltestellung zurückgeholt werden.

Der Energiespeicher ist in einer Ausführung in der Windenergieanlage, in einer Ausführung im Rotor oder der Gondel, angeordnet.

Dadurch kann in einer Ausführung die Sicherheit erhöht werden.

In einer Ausführung weist die Windenergieanlage eine oder mehrere Abschalteinrichtung(en) zum Unterbrechen der Energieversorgung des ersten Verstellantriebs über die zweite Umkehreinrichtung auf, wobei in einer Weiterbildung die bzw. eine oder mehrere der Abschalteinrichtung(en jeweils) durch die Sicherheitssteuerung kontrolliert werden bzw. Abschalteinrichtung und Sicherheitssteuerung hierzu eingerichtet sind bzw. verwendet werden. In einer Ausführung unterbrechen die bzw. eine oder mehrere der Abschalteinrichtung(en jeweils) der Energieversorgung des ersten Verstellantriebs über die zweite Umkehreinrichtung infolge eines Erreichens einer vorgegebenen Haltestellung oder eines vorgegebenen Haltebereichs des ersten Rotorblatts, in einer Ausführung (eine Abschalteinrichtung) infolge eines Erreichens einer Fahnenstellung oder eines Haltebereichs um die Fahnenstellung und/oder (eine Abschalteinrichtung) infolge eines Erreichens einer Trudelstellung, die von der Fahnenstellung um höchstens 15°, insbesondere höchstens 10° abweicht, oder eines Haltebereichs um die Trudelstellung.

Hierdurch kann in einer Ausführung mit in die erste Schaltstellung geschalteter zweiter Umkehreinrichtung das an sich bekannte Sicherheitskonzept weiterhin realisiert und dadurch mit wenigstens ähnlicher Sicherheit auch bei einer Störung der Energieversorgung über die erste Umkehreinrichtung das Rotorblatt gegensinnig verstellt werden. Zusätzlich oder alternativ kann durch Kontrollieren der Abschalteinrichtung(en) durch die Sicherheitssteuerung diese das Rotorblatt gezielt in die gewünschte Verstellrichtung, insbesondere abwechselnd in die erste und zweite Richtung und/oder stufenweise in die erste Richtung und/oder stufenweise in die zweite Richtung verstellen und/oder eine Ein- bzw. Abschaltbelastung der zweiten Umkehreinrichtung durch deren Umschalten (erst) bei durch eine Abschalteinrichtung unterbrochener Energieversorgung und/oder umgekehrt Herstellen bzw. Aktivieren der Energieversorgung durch (Schließen) eine(r) Abschalteinrichtung (erst) nach dem Umschalten der zweiten Umkehreinrichtung reduziert werden.

In einer Ausführung weist die Windenergieanlage eine Zeitverzögerungseinrichtung, in einer Ausführung ein oder mehrere Zeit(schalt)relais oder dergleichen, auf, die zwischen einem Erfassen einer vorgegebenen Stellung des ersten Rotorblatts und dem Unterbrechen der Energieversorgung durch die bzw. eine der Zeitverzögerungseinrichtung zugeordnete Abschalteinrichtung wenigstens eine vorgegebene Wartezeit bewirken.

Dies erlaubt in einer Ausführung ein vorteilhaftes Positionieren des Rotorblatts im Inneren eines Haltebereichs bei Anfahren aus gegensinnigen Richtungen und Unterbrechen der Energieversorgung des ersten Verstellantriebs infolge eines Erfassens eines Erreichens dieses Haltebereichs: fährt das Rotorblatt den Haltebereichs in der ersten Richtung an, wird ein Erreichen eines in der ersten Richtung vordersten Endes des Haltebereichs erfasst. Fährt das Rotorblatt den Haltebereichs umgekehrt in der zweiten Richtung an, wird ein Erreichen eines in der zweiten Richtung vordersten Endes des Haltebereichs erfasst. Durch die Zeitverzögerung bzw. Wartezeit wird das Rotorblatt jeweils weiter in der Anfahrrichtung und damit jeweils in das Innere des Haltebereichs verstellt, so dass es in diesem anschließend, insbesondere bei (dann) geschlossener Pitch-Bremse, vorteilhaft etwas verrutschen kann, ohne den Haltebereich zu verlassen und damit ungewollt ein Deaktivieren der Abschalteinrichtung bzw. ein erneutes Verstellen mit Energieversorgung über die zweite Umkehreinrichtung zu bewirken.

In einer Ausführung weist die Windenergieanlage eine oder mehrere Leitungen zur Energieversorgung des ersten Verstellantriebs aus dem Energiespeicher über die erste Umkehreinrichtung in wenigstens einem weiteren Sonderbetriebsmodus auf.

Auf diese Weise kann, in einer Ausführung primär bzw. priorisiert, die erste Umkehreinrichtung (ebenfalls) zur Vorgabe der Verstellrichtung auch bei Energieversorgung aus dem Energiespeicher genutzt und (nur) bei Bedarf, insbesondere einer Störung der Funktion der ersten Umkehreinrichtung, auf die zweite Umkehreinrichtung zurückgegriffen werden.

Hierdurch wird in einer Ausführung vorteilhaft eine zusätzliche Sicherheit und/oder bessere Regelbarkeit (durch die erste Umkehreinrichtung) zur Verfügung gestellt. Entsprechend erfolgt die Energieversorgung aus dem Energiespeicher in einer Ausführung alternativ
- , in einer Ausführung bevorzugt bzw. priorisiert, indirekt über die erste Umkehreinrichtung, insbesondere (nur und/oder stets) sofern diese funktionsfähig ist, und entsprechend nicht über die zweite Umkehreinrichtung; oder
- direkt über die zweite Umkehreinrichtung, insbesondere (nur und/oder stets) sofern die erste Umkehreinrichtung nicht funktionsfähig ist, und entsprechend dann nicht (auch) über die erste Umkehreinrichtung.

In einer Ausführung weist die Windenergieanlage eine Pitch-Bremse zum Halten des ersten Rotorblatts in einer aktuellen Stellung und eine Erfassungseinrichtung, in einer Ausführung einen oder mehrere Sensoren, zum Erfassen einer Abweichung zwischen einer aktuellen Stellung des ersten Rotorblatts und einer vorgegebenen Sollstellung auf, wobei die Sicherheitssteuerung das erste Rotorblatt mithilfe des aus dem Energiespeicher über die zweite Umkehreinrichtung versorgten ersten Verstellantriebs in Richtung der Sollstellung verstellt, falls die Abweichung einen vorgegebenen Grenzwert überschreitet, bzw. hierzu vorgesehen, insbesondere eingerichtet ist bzw. verwendet wird.

Somit wird in einer Ausführung eine Pitch-Bremse in dem ersten Sonderbetriebsmodus durch den aus dem Energiespeicher über die zweite Umkehreinrichtung versorgten ersten Verstellantrieb abgesichert, der bei einem (Durch)Rutschen der Pitch-Bremse eingreift und das Rotorblatt zur Sollstellung zurückstellt.

In einer Ausführung rutscht die Pitch-Bremse planmäßig bei einer auf das Rotorblatt wirkenden Last, welche geringer als eine in einer Fahnenstellung auf das Rotorblatt wirkenden Maximallast ist, für die die Windenergieanlage ausgelegt ist, in einer Ausführung ist die Pitch-Bremse entsprechend bzw. derart ausgelegt, insbesondere dimensioniert. Diese Last bzw. Maximallast umfasst in einer Ausführung ein (maximales Auslegungs-)Drehmoment um die Rotorblatt-Drehachse.

Nach bisherigen Sicherheitskonzepten muss die Pitch-Bremse das Rotorblatt auch dann alleine und zuverlässig in seiner Fahnenstellung halten, wenn eine bei Auslegung der Windenergieanlage angenommene bzw. zugrundegelegte bzw. erwartetete Maximallast auf das Rotorblatt wirkt.

Demgegenüber wird in einer Ausführung der vorliegenden Erfindung ein Wegrutschen des durch die Pitch-Bremse in einer aktuellen Stellung gehaltenen Rotorblatts bei hoher Last, insbesondere wenigstens bei einer bei Auslegung der Windenergieanlage angenommenen Fahnenstellungs-Maximallast auf das Rotorblatt, bewusst in Kauf genommen und in diesem Fall durch Verstellen des Rotorblatts mithilfe seines Verstellantriebs mittels Energieversorgung des Verstellantriebs aus dem Energiespeicher, begrenzt, vorzugsweise kompensiert.

Dies kann besonders dann sehr vorteilhaft sein, wenn der Verstellantrieb und/oder Energiespeicher, insbesondere aus Sicherheitsgründen, zum Verstellen des Rotorblatts in die Fahnenstellung auch bei geschlossener Pitch-Bremse ausgelegt sind, da in diesem Fall eine bewusst schwächere Auslegung der Pitch-Bremse eine entsprechend günstigere Auslegung von Verstellantrieb bzw. Energiespeicher ermöglicht.

In einer Ausführung weist der erste Verstellantrieb wenigstens einen Elektromotor, in einer Ausführung wenigstens einen Gleichstrommotor, und der Energiespeicher wenigstens einen elektrischen Energiespeicher, insbesondere einen Akkumulator, auf. In einer Ausführung weist die erste Umkehreinrichtung in diesem Fall wenigstens einen, in einer Ausführung durch einen (Pitch)Regler kontrollierten, Umrichter auf. Zusätzlich oder alternativ weist in einer Ausführung die zweite Umkehreinrichtung wenigstens ein Schütz, insbesondere zum Umpolen der ersten und zweiten Ein- und Ausgänge, auf. Zusätzlich oder alternativ weist in einer Ausführung die bzw. wenigstens eine der Abschalteinrichtung(en) wenigstens ein Schütz zum Unterbrechen der Energieversorgung des ersten Verstellantriebs über die zweite Umkehreinrichtung auf.

Insbesondere aufgrund der Ausfallmöglichkeiten elektrischer Rotorblattverstellungen kann die vorliegende Erfindung hierfür mit besonderem Vorteil eingesetzt werden. Dabei kann insbesondere eine Umpolung einer direkten Energieversorgung eines Gleichstrommotors aus dem Energiespeicher besonders vorteilhaft sein, da sie dessen Vorteile mit der Möglichkeit kombiniert, mit diesem im ersten Sonderbetriebsmodus in gegensinnige Richtungen zu verstellen.

In einer Ausführung weist der erste Verstellantrieb wenigstens einen hydraulischen Aktuator, insbesondere wenigstens einen Hydraulikzylinder, und der Energiespeicher wenigstens einen (Hydraulik)Druckspeicher, insbesondere wenigstens einen hydropneumatischen bzw. Hydraulikdruckspeicher auf. In einer Ausführung weist die erste Umkehreinrichtung in diesem Fall ein oder mehrere, in einer Ausführung durch einen (Pitch)Regler kontrollierte, Schaltventile auf. Zusätzlich oder alternativ weist in einer Ausführung die zweite Umkehreinrichtung ein oder mehrere Schaltventile, insbesondere zum Umpolen der ersten und zweiten Ein- und Ausgänge bzw. Durchströmungsrichtung(en) durch den hydraulischen Verstellantrieb, auf. Zusätzlich oder alternativ weist in einer Ausführung die bzw. wenigstens eine der Abschalteinrichtung(en) wenigstens ein, insbesondere selbsttätiges, Ventil auf, das in einer Ausführung bei, insbesondere durch, Überfahren einer entsprechenden Hubstellung des Hydraulikzylinders selbsttätig schaltet, um die Energieversorgung des ersten Verstellantriebs über die zweite Umkehreinrichtung zu unterbrechen. Entsprechend wird auch (eine) Hydraulikdruck(versorgung) zum (Winkel)Verstellen eines Rotorblatts durch seinen hydraulischen Verstellantrieb als (Druck)Energie(versorgung) im Sinne der vorliegenden Erfindung bezeichnet bzw. unter Energie insbesondere Antriebsenergie für den Verstellantrieb, insbesondere also elektrische Energie für einen elektromotorischen Verstellantrieb bzw. Hydraulikdruck(energie) für einen hydraulischen Verstellantrieb verstanden. Mit anderen Worten kann das Wort "Energie" vorliegend in einer Ausführung durch "(Hydraulik)Druck" ersetzt werden.

Insbesondere aufgrund der robusten Verfahrmöglichkeit solcher hydraulischer Rotorblattverstellungen kann die vorliegende Erfindung hierfür mit besonderem Vorteil eingesetzt werden.

In einer Ausführung weist der Rotor wenigstens ein weiteres winkelverstellbares Rotorblatt und einen weiteren Verstellantrieb zum Verstellen dieses weiteren Rotorblatts auf, wobei die Verstellung analog zu der hier mit Bezug auf das erste Rotorblatt beschriebenen erfolgen kann. Insbesondere können eines oder mehrere der hier mit Bezug auf das erste Rotorblatt beschriebenen Merkmale analog auch bei dem bzw. einem oder mehreren der weiteren Rotorblätter verwirklicht sein.

In einer Ausführung ist der weitere Verstellantrieb über die zweite Umkehreinrichtung mit Energie aus dem Energiespeicher versorgbar.

Dadurch kann in einer Ausführung die zweite Umkehreinrichtung zur, insbesondere sukzessiven bzw. sequentiellen, Vorgabe der Verstellrichtungen von zwei oder mehr Rotorblättern genutzt werden: so kann insbesondere zunächst durch die zweite Umkehreinrichtung die Verstellrichtungen für das erste Rotorblatt vorgegeben und dann der erste Verstellantrieb durch Kontrollieren der Abschalteinrichtung zum Unterbrechen der Energieversorgung des ersten Verstellantriebs in der vorgegebenen Richtung verstellt werden, während der weitere Verstellantrieb durch Kontrollieren einer weiteren Abschalteinrichtung zum Unterbrechen der Energieversorgung des weiteren Verstellantriebs über die zweite Umkehreinrichtung nicht mit Energie versorgt wird. Anschließend kann die Energieversorgung des ersten Verstellantriebs durch die entsprechende Abschalteinrichtung unterbrochen, die Verstellrichtungen für das weitere Rotorblatt durch die zweite Umkehreinrichtung vorgegeben und dann der weitere Verstellantrieb durch Kontrollieren der weiteren Abschalteinrichtung zum Unterbrechen der Energieversorgung des weiteren Verstellantriebs in dieser vorgegebenen Richtung verstellt werden, während nun der erste Verstellantrieb nicht mit Energie versorgt wird.

In einer Ausführung weist die Windenergieanlage die erste Umkehreinrichtung zur Energieversorgung des ersten Verstellantriebs aus der Energiequelle und die zweite, durch die Sicherheitssteuerung umschaltbare Umkehreinrichtung zur Energieversorgung des ersten Verstellantriebs aus dem Energiespeicher sowie eine andere Umkehreinrichtung zur Energieversorgung des weiteren Verstellantriebs aus der Energiequelle und/oder eine weitere, insbesondere durch dieselbe oder eine zusätzliche Sicherheitssteuerung umschaltbare, Umkehreinrichtung zur Energieversorgung des weiteren Verstellantriebs aus demselben oder einem weiteren Energiespeicher auf.

Dadurch kann in einer Ausführung die Sicherheit verbessert werden.

Nach einer Ausführung der vorliegenden Erfindung wird zum Betreiben der Windenergieanlage das erste Rotorblatt bei Auftritt wenigstens eines Sonderbetriebs-, insbesondere Störfalls mithilfe des aus dem Energiespeicher über die zweite Umkehreinrichtung versorgten ersten Verstellantriebs in einer ersten Betriebsart des ersten Sonderbetriebsmodus, in der die zweite Umkehreinrichtung durch die Sicherheitssteuerung in die erste Schaltstellung geschaltet ist, in der ersten Richtung verstellt. In einer Ausführung wird das erste Rotorblatt in einer zweiten Betriebsart des ersten Sonderbetriebsmodus, in der die zweite Umkehreinrichtung durch die Sicherheitssteuerung in die zweite Schaltstellung geschaltet ist, in einer zu der ersten Richtung gegensinnigen zweiten Richtung verstellt, insbesondere also, während der erste Sonderbetriebsmodus, insbesondere Störfall, noch andauert.

Wie an anderer Stelle beschrieben, kann hierdurch - unter bewusster Abkehr von bisherigen Sicherheitskonzepten mit einer einzigen, festen Verstellrichtung für den Sonderbetriebsfall bzw. -modus, insbesondere einen Störfall - auch in einem solchen Sonderbetriebsfall bzw. - modus vorteilhaft eine, gegebenenfalls eingeschränkte, Blattwinkelregelung und/oder Rückstellung auf eine Sollstellung erfolgen.

In einer Ausführung schaltet die Sicherheitssteuerung in dem ersten Sonderbetriebsmodus die zweite Umkehreinrichtung ein- oder mehrfach von der ersten in die zweite Schaltstellung und/oder ein- oder mehrfach von der zweiten in die erste Schaltstellung um.

Hierdurch kann in einer Ausführung eine, gegebenenfalls eingeschränkte, Blattwinkelregelung im ersten Sonderbetriebsmodus realisiert bzw. aufrechterhalten und dadurch insbesondere ein Energieertrag der Windenergieanlage verbessert werden.

In einer Ausführung schaltet die Sicherheitssteuerung die zweite Umkehreinrichtung in dem ersten Sonderbetriebsmodus stets von der zweiten in die erste Schaltstellung zurück bzw. ist derart bzw. hierzu eingerichtet.

Auf diese Weise kann in einer Ausführung eine Sicherheit verbessert werden, da somit durch die Sicherheitssteuerung gewährleistet wird, dass die erste Richtung, die in einer Ausführung der festen, einzigen Richtung bisheriger Sicherheitskonzepte entspricht, nur gezielt und unter Aufsicht der Sicherheitssteuerung temporär umgekehrt wird. In einer Ausführung entspricht die erste Richtung einer Anfahrrichtung einer Fahnenstellung des ersten Rotorblatts, in einer Ausführung aus einer, insbesondere energieoptimierten, Normalbetriebsstellung und/oder auf kürzestem bzw. dem kürzeren von zwei möglichen, Weg(en).

In einer Ausführung unterbricht die Sicherheitssteuerung in dem ersten Sonderbetriebsmodus die Energieversorgung des ersten Verstellantriebs über die zweite Umkehreinrichtung in der ersten Betriebsart und/oder in der zweiten Betriebsart (jeweils) ein- oder mehrfach, in einer Ausführung bevor sie die zweite Umkehreinrichtung von der ersten in die zweite und/oder von der zweiten in die erste Schaltstellung umschaltet. In einer Ausführung schaltet die Sicherheitssteuerung in dem ersten Sonderbetriebsmodus die zweite Umkehreinrichtung nur bei unterbrochener Energieversorgung des ersten Verstellantriebs um. Zusätzlich oder alternativ aktiviert in einer Ausführung die Sicherheitssteuerung in dem ersten Sonderbetriebsmodus im Falle eines Umschaltens der zweiten Umkehreinrichtung die Energieversorgung des ersten Verstellantriebs über die zweite Umkehreinrichtung erst, nachdem die zweite Umkehreinrichtung umgeschaltet worden ist.

Auf diese Weise muss die zweite Umkehreinrichtung die Energie(versorgung) nur führen, wird aber nicht durch das Schließen bzw. Öffnen belastet, beispielsweise durch Schaltfunken, Schaltdrücke oder dergleichen. Durch mehrfaches Unterbrechen der Energieversorgung in der ersten bzw. zweiten Betriebsart kann in einer Ausführung vorteilhaft das Rotorblatt stückweise verstellt und dadurch vorteilhaft geregelt werden.

In einer Ausführung wird der erste Sonderbetriebsmodus infolge, insbesondere während, einer Störung der Energieversorgung des ersten Verstellantriebs aus der Energiequelle über die erste Umkehreinrichtung, in einer Ausführung infolge, insbesondere während, eines Ausfalls der Energiequelle, insbesondere eines Netzausfalls oder Ausfall einer Hydraulikquelle, insbesondere -pumpe, und/oder einer Funktionsstörung der ersten Umkehreinrichtung, durchgeführt, wobei eine Funktionsstörung der ersten Umkehreinrichtung insbesondere eine Störung der ersten Umkehreinrichtung selber, insbesondere also ein Defekt eines Umrichters oder Schaltventils, oder eine Störung eines die erste Umkehreinrichtung kontrollierenden (Pitch)Reglers sein kann.

Für solche Fälle kann die vorliegende Erfindung mit besonderem Vorteil eingesetzt werden, ohne hierauf beschränkt zu sein.

In einer Ausführung wird eine Abweichung zwischen einer aktuellen Stellung des ersten Rotorblatts, in der eine bzw. die Pitch-Bremse zum Halten des Rotorblatts geschlossen ist, von einer vorgegebenen Sollstellung erfasst, wobei das erste Rotorblatt mithilfe des aus dem Energiespeicher über die zweite Umkehreinrichtung versorgten ersten Verstellantriebs in Richtung der Sollstellung verstellt wird, falls die Abweichung einen vorgegebenen Grenzwert überschreitet.

Wie bereits erläutert, kann hierdurch in einer Ausführung die Pitch-Bremse bzw. das Rotorblatt in der Sollstellung gesichert und dadurch in einer Ausführung die Pitch-Bremse schwächer ausgelegt werden.

In einer Ausführung wird das erste Rotorblatt mithilfe des aus dem Energiespeicher über die zweite Umkehreinrichtung versorgten ersten Verstellantriebs in der ersten Richtung verstellt, falls (ermittelt worden ist, dass) der Verstellweg von der erfassten aktuellen Stellung in die Sollstellung in der ersten Richtung kürzer als in der zweiten Richtung ist, und in der zweiten Richtung verstellt wird, falls (ermittelt worden ist, dass) der Verstellweg von der aktuellen Stellung in die Sollstellung in der zweiten Richtung kürzer als in der ersten Richtung ist. Mit anderen Worten wird in einer Ausführung die Sollstellung auf dem kürzeren von zwei möglichen Verstellwegen angefahren.

Auf diese Weise kann in einer Ausführung ein Durchfahren von besonders ungünstigen Stellungen vermieden werden.

In einer Ausführung wird die Energieversorgung des ersten Verstellantriebs aus dem Energiespeicher abgeschaltet und auf Basis wenigstens eines reaktivierenden Aktivierungssignals wieder zugeschaltet, während der erste Sonderbetriebsmodus noch durchgeführt wird.

Hierdurch kann in einer Ausführung die Sicherheit erhöht, insbesondere ein ungewolltes Aktuieren des Verstellantriebs über eine vorgegebenen Haltestellung bzw. einen vorgegebenen Haltebereich hinaus vermieden werden. Durch das Wiederzuschalten trotz weiter andauerndem Sonderbetriebsfall bzw. -modus kann dabei vorteilhaft auf Bedingungen bzw. Geschehnisse, die während des (noch andauernden) Sonderbetriebsfalls bzw. -modus eintreten, reagiert werden.

So kann es insbesondere wünschenswert sein, das Rotorblatt auch bei noch andauerndem Sonderbetriebsfall aus der angefahrenen Haltestellung weiter zu verstellen, beispielsweise manuell durch Wartungspersonal, welches durch Umkehren der Verstellrichtung mittels der zweiten Umkehreinrichtung das Rotorblatt nun variabel verfahren kann.

Falls die Pitch-Bremse während des Sonderbetriebsfalls bzw. -modus (durch)rutscht, kann in einer Ausführung hierauf vorteilhaft durch Rückstellen mithilfe des Verstellantriebs reagiert werden.

In einer Ausführung ist, insbesondere wird, ein reaktivierendes Aktivierungssignal durch manuelle Eingabe über wenigstens eine Schnittstelle auslösbar, insbesondere ausgelöst.

Hierdurch kann in einer Ausführung ein Wartungspersonal während des noch andauernden Sonderbetriebsfalls das Rotorblatt mithilfe des Verstellantriebs und Energiespeichers gegensinnig verstellen.

In einer Ausführung ist die wenigstens eine Schnittstelle am Rotor angeordnet, insbesondere von der Gondel aus sicht- und/oder, insbesondere manuell, erreichbar.

Dadurch kann in einer Ausführung die Sicherheit erhöht, insbesondere das reaktivierende Aktivierungssignal direkt vor Ort, vorzugsweise mit Sichtkontakt, ausgelöst werden.

In einer Ausführung ist die manuelle Auslösung über zwei oder mehr Schnittstellen möglich, die in einer Ausführung am Rotor angeordnet, insbesondere längs eines Umfangs des

Rotors verteilt, in einer Ausführung auf einander gegenüberliegenden Seiten des Rotors angeordnet sind.

Dadurch kann in einer Ausführung die Sicherheit erhöht, insbesondere das reaktivierende Aktivierungssignal bei verschiedenen Rotordrehlagen ausgelöst werden.

In einer Ausführung erfordert die manuelle Auslösung des reaktivierenden Aktivierungssignal wenigstens zwei, in einer Ausführung sequentielle, in einer Ausführung zeitlich voneinander beabstandete, manuelle Eingaben. In einer Ausführung wird durch eine manuelle Eingabe an der bzw. wenigstens einer der Schnittstelle(n) zunächst, in einer Ausführung für eine vorgegebene Zeit, in einen Bereitschaftsmodus gewechselt und dieser in einer Ausführung signalisiert, in einer Ausführung an der bzw. den, insbesondere durch die, Schnittstelle(n), und erst bei einer weiteren manuellen Eingabe während des Bereitschaftsmodus dann die Energieversorgung aus dem Energiespeicher zum Verstellen des Rotorblatts wieder zugeschaltet und in einer Ausführung auch dieses Verstellen initiiert. Eine Schnittstelle weist in einer Ausführung einen hard- oder softwaretechnisch ausgebildeten Taster auf.

Dadurch kann in einer Ausführung die Sicherheit erhöht, insbesondere die Wahrscheinlichkeit eines unbeabsichtigten Verstellens reduziert werden.

In einer Ausführung werden ein oder mehrere, insbesondere alle, Schritte des Verfahrens vollständig oder teilweise automatisiert durchgeführt, insbesondere durch die Windenergieanlage, insbesondere ihre Sicherheitssteuerung.

Ein Steuern umfasst in einer Ausführung ein Regeln.

In einer Ausführung ist der Störfall ein Netzausfall oder ein Störfall, insbesondere Defekt der Windenergieanlage, bei einem, insbesondere während eines, Netzausfall(s), und/oder ist, insbesondere wird, in dem ersten Sonderbetriebsmodus bzw. Störfall der erste und/oder weitere Verstellantrieb von der Energiequelle, in einer Ausführung einem (Strom)Netz oder einer Hydraulikquelle bzw. -versorgung bzw. einem Hydrauliksystem bzw. -netz, aus der er in einem Normal- bzw. Regelbetrieb(smodus) versorgt wird, getrennt und/oder (stattdessen) wenigstens temporär, insbesondere zum Verstellen über die zweite bzw. weitere Umkehreinrichtung, aus dem (entsprechenden) Energiespeicher versorgt bzw. die Energieversorgung des ersten und/oder weiteren Verstellantriebs von der Energiequelle auf den (entsprechenden) Energiespeicher umgeschaltet. In einer Ausführung wird der ersten Sonderbetriebsmodus infolge, insbesondere während, dieses Störfalls durchgeführt. In einer Ausführung umfasst, in einer Weiterbildung ist, die Energiequelle ein (Strom)Netz oder ein Hydrauliksystem bzw. -netz bzw. eine Hydraulik(druck)quelle bzw. -versorgung.

In einer Ausführung ist eine bzw. die Fahnenstellung eine Stellung wenigstens im Wesentlichen senkrecht zu einer Ausrichtung für maximale Leistung bzw. um wenigstens 85° und/oder höchstens 95° gegenüber einer solchen (normalen) Ausrichtung verdreht.

In einer Ausführung ist der erste Verstellantrieb über die zweite Umkehreinrichtung nicht mit Energie aus der Energiequelle versorgbar, um das erste Rotorblatt in der ersten oder zweiten Richtung zu verstellen bzw. ist die zweite Umkehreinrichtung nicht zur Energieversorgung des ersten Verstellantriebs aus der Energiequelle zum Verstellen des ersten Rotorblatts in der ersten oder zweiten Richtung eingerichtet bzw. ist die Windenergieanlage, insbesondere die zweite Umkehreinrichtung, derart eingerichtet, dass der erste Verstellantrieb nicht über die zweite Umkehreinrichtung zum Verstellen des ersten Rotorblatts in der ersten oder zweiten Richtung mit Energie aus der Energiequelle versorgbar ist. Zusätzlich oder alternativ ist die zweite Umkehreinrichtung in einer Ausführung nur durch die Sicherheitssteuerung umschaltbar. In einer Ausführung ist der weitere Verstellantrieb über die zweite oder weitere Umkehreinrichtung nicht mit Energie aus der Energiequelle versorgbar, um das weitere Rotorblatt zu verstellen bzw. ist die zweite oder weitere Umkehreinrichtung nicht zur Energieversorgung des weiteren Verstellantriebs aus der Energiequelle zum Verstellen des weiteren Rotorblatts eingerichtet bzw. ist die Windenergieanlage, insbesondere die zweite oder weitere Umkehreinrichtung, derart eingerichtet, dass der weitere Verstellantrieb nicht über diese zweite bzw. weitere Umkehreinrichtung zum Verstellen des weiteren Rotorblatts mit Energie aus der Energiequelle versorgbar ist. Zusätzlich oder alternativ ist in einer Ausführung die weitere Umkehreinrichtung nur durch die Sicherheitssteuerung umschaltbar. In einer Ausführung ist die zweite und/oder weitere Umkehreinrichtung nur zur Versorgung des ersten bzw. weiteren Verstellantriebs aus dem (entsprechenden) Energiespeicher vorgesehen, insbesondere eingerichtet. Hierdurch kann in einer Ausführung die Sicherheit erhöht werden.

Weitere Vorteile und Merkmale ergeben sich aus den Unteransprüchen und den Ausführungsbeispielen. Hierzu zeigt, teilweise schematisiert:
- Fig. 1:: eine Windenergieanlage nach einer Ausführung der vorliegenden Erfindung;
- Fig. 2:: einen Teil der Windenergieanlage; und
- Fig. 3:: ein Verfahren zum Betreiben der Windenergieanlage nach einer Ausführung der vorliegenden Erfindung.

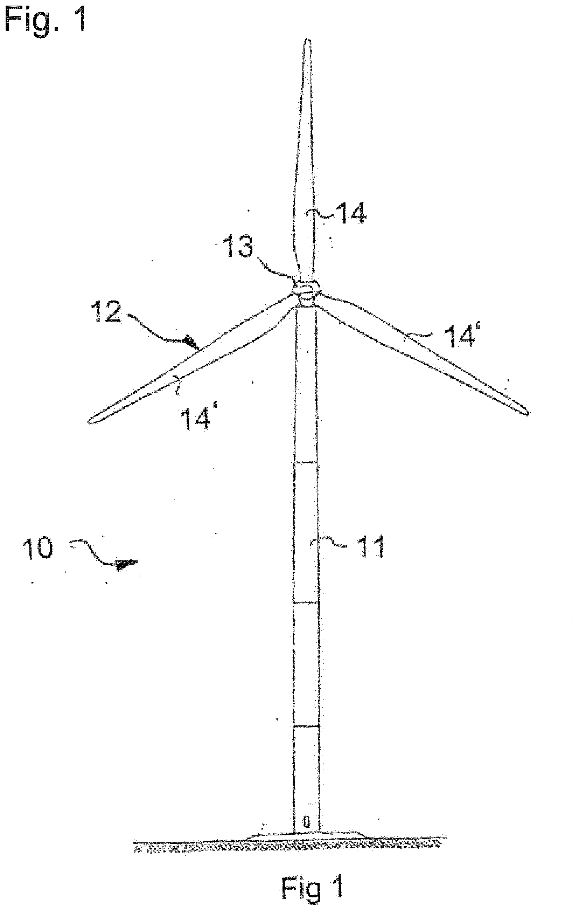

Fig. 1 zeigt eine Windenergieanlage 10 nach einer Ausführung der vorliegenden Erfindung mit einem Turm 11, an dessen oberem Ende ein Rotor 12 mit einer Rotornabe 13 und drei Rotorblättern angeordnet ist.

Die drei Rotorblätter, von denen ein beliebiges ein erstes Rotorblatt 14 und die beiden anderen jeweils ein weiteres Rotorblatt 14' im Sinne der vorliegenden Erfindung sein können, werden durch eigene Verstellantriebe bzw. jeweils durch einen eigenen Verstellantrieb individuell (winkel)verstellt bzw. um ihre Längsachse verdreht, insbesondere zwischen einer Nullstellung, in der sie eine maximale Leistung erzeugen, und einer Fahnenstellung, in der sie minimale, insbesondere keine, Leistung an der Rotor-Drehachse bzw. -nabe erzeugen.

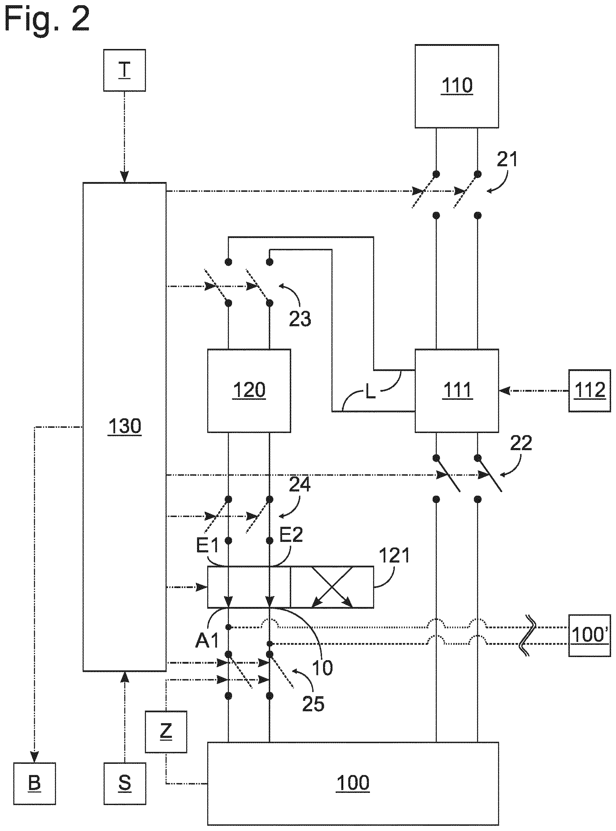

Fig. 2 zeigt den ersten Verstellantriebe 100 zum Verstellen des ersten Rotorblatts 14, der insbesondere ein elektromotorischer oder hydraulischer Verstellantrieb sein kann. Die anderen Verstellantriebe 100' zum Verstellen der weiteren Rotorblätter 14' können identisch ausgebildet sein und betrieben werden.

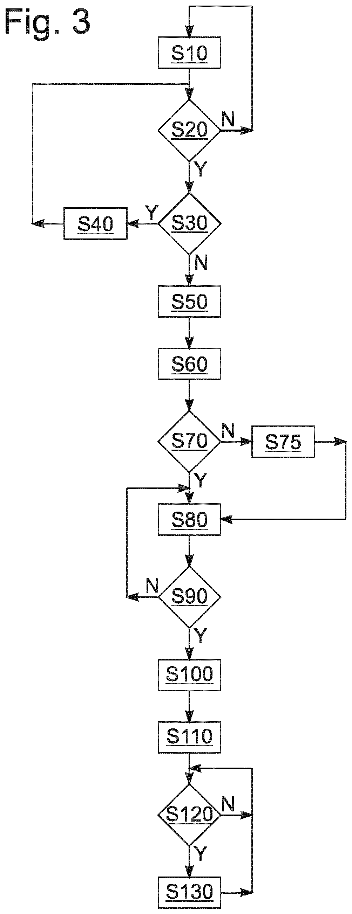

Er wird in einem regulären bzw. Normalbetriebsmodus durch Energie aus einer Energiequelle 110, im Ausführungsbeispiel einem Netz oder einer Hydraulik(druck)quelle, über eine erste Umkehreinrichtung 111 versorgt, die durch einen Pitchregler 112 kontrolliert wird und im Ausführungsbeispiel einen Umrichter oder ein oder mehrere Schaltventile aufweist (Fig. 3: Schritt S10).

Bei einem Netzausfall oder Ausfall der Hydraulik(druck)quelle (S20: "Y") wird, sofern die erste Umkehreinrichtung 111 und der Pitchregler 112 weiter korrekt funktionieren (S30: "Y"), der Verstellantrieb 100 statt aus der Energiequelle 110 aus einem Energiespeicher 120 über die erste Umkehreinrichtung 111 versorgt (Fig. 3: Schritt S40 - weiterer Sonderbetriebsmodus).

Hierzu werden, beispielsweise durch eine Sicherheitssteuerung 130, entsprechende Schalteinrichtungen 21, 23 betätigt, insbesondere eine Verbindung zwischen der Energiequelle 110 und ersten Umkehreinrichtung 111 unterbrochen (Schalteinrichtung 21 geöffnet) und diese stattdessen über Leitungen L mit dem Energiespeicher 120 verbunden (Schalteinrichtung 23 geschlossen).

Liegt hingegen eine Funktionsstörung der ersten Umkehreinrichtung 111, insbesondere also ein Defekt des Umrichters bzw. eines der Schaltventile oder des die erste Umkehreinrichtung 111 kontrollierenden Pitchreglers 112 vor (S30: "N"), wird ein erster Sonderbetriebsmodus durchgeführt. In einer Abwandlung kann diese priorisierte Energieversorgung aus dem Energiespeicher 120 über die (weiterhin funktionsfähige - S30: "Y") erste Umkehreinrichtung 111 auch entfallen.

In dem ersten Sonderbetriebsmodus unterbricht die Sicherheitssteuerung 130 mittels Schalteinrichtung 22 eine Verbindung zwischen der ersten Umkehreinrichtung 111 und dem Verstellantrieb 100 (Fig. 3: Schritt S50).

Zudem ermittelt die Sicherheitssteuerung 130 eine gewünschte Verstellrichtung für das durch den Verstellantrieb 100 aktuierte erste Rotorblatt, beispielsweise eine erste Richtung von der Nullstellung (auf kürzestem Weg) zur Fahnenstellung, um die Fahnenstellung anzufahren, oder eine gegensinnige zweite Richtung, beispielsweise, um das Rotorblatt in einem eingeschränkten Notbetrieb weiter zur Leistungsregelung der Windenergieanlage in Richtung Nullstellung zurückzustellen oder das in der ersten Richtung über die Fahnenstellung hinausgerutschte Rotorblatt in die Fahnenstellung zurückzustellen (Fig. 3: Schritt S60).

Ist die gewünschte Verstellrichtung nicht die erste Richtung (S70: "N"), schaltet die Sicherheitssteuerung 130 eine zweite Umkehreinrichtung 121, im Ausführungsbeispiel ein Schütz oder ein Mehrwege-Schaltventil, von seiner in Fig. 2 gezeigten ersten in eine zweite Schaltstellung um (S75), andernfalls (S70: "Y") verbleibt die zweite Umkehreinrichtung 121 in ihrer ersten Schaltstellung.

In der ersten Schaltstellung verbindet die zweite Umkehreinrichtung 121 einen ersten Eingang E1 mit einem ersten Ausgang A1 sowie einen zweiten Eingang E2 mit einem zweiten Ausgang A2, in der zweiten Schaltstellung umgekehrt den ersten Eingang E1 mit dem zweiten Ausgang A2 sowie den zweiten Eingang E2 mit dem ersten Ausgang A1.

Dann schließt die Sicherheitssteuerung 130 eine Abschalteinrichtung 24, so dass der Verstellantrieb 100 das erste Rotorblatt in der entsprechenden Richtung verstellt (Fig. 3: Schritt S80). Dies ist der in Fig. 2 (ausgezogen) gezeigte Zustand.

Erreicht dieses die Fahnenstellung (S90: "Y"), öffnet dies eine weitere Abschalteinrichtung 25, im Ausführungsbeispiel ein Schütz oder ein selbsttätiges Schaltventil, und die Energieversorgung wird mit einer Zeitverzögerung durch eine Zeitverzögerungseinrichtung Z unterbrochen (Fig. 3: Schritt S100). In einer nicht dargestellten Abwandlung kann die weitere Abschalteinrichtung 25, insbesondere bei hydraulischen Verstellantrieben, auch durch einen mechanischen (End)Anschlag ersetzt sein.

Die Sicherheitssteuerung 130 öffnet die Abschalteinrichtung 24 und schaltet die zweite Umkehreinrichtung 121 gegebenenfalls in die erste Schalstellung zurück (Fig. 3: Schritt S110).

Anschließend überwacht sie mittels Sensoren S eine Stellung des Rotorblatts.

Entfernt sich dieses trotz geschlossener Pitch-Bremse B zu weit von der Fahnenstellung (S120: "Y"), ermittelt die Sicherheitssteuerung 130 als gewünschte Verstellrichtung die erste Richtung, falls der Verstellweg von der aktuellen Stellung in die Fahnenstellung in der ersten Richtung kürzer als in der zweiten Richtung ist, und die zweite Richtung, falls der Verstellweg von der aktuellen Stellung in die Fahnenstellung in der zweiten Richtung kürzer als in der ersten Richtung ist, und verstellt anschließend das Rotorblatt zurück in die Fahnenstellung, indem sie die Abschalteinrichtung 24 entsprechend kontrolliert (Fig. 3: Schritt S130).

In analoger Weise kann die Sicherheitssteuerung 130 im ersten Sonderbetriebsmodus das Rotorblatt auch beispielsweise in eine gewünschte Stellung zwischen Null- und Fahnenstellung bzw. in die Nullstellung verstellen, um eine (eingeschränkte) Leistungsregelung der Windenergieanlage durchzuführen, indem sie, wie vorstehend beschrieben, zunächst die hierfür erforderliche bzw. gewünschte Verstellrichtung ermittelt, die zweite Umkehreinrichtung 121 gegebenenfalls umschaltet, und dann die Abschalteinrichtung 24 entsprechend kontrolliert.

Auch falls ein Wartungspersonal über einen Taster T oder dergleichen einen Verfahrwunsch eingibt, kann die Sicherheitssteuerung 130 diesen im ersten Sonderbetriebsmodus in analoger Weise umsetzen, beispielsweise bei Eingabe eines Verfahrwunsches in der zweiten Richtung die zweite Umkehreinrichtung 121 umschalten und die Abschalteinrichtung 24 anschließend solange schließen, solange über den Taster T eine entsprechende aktive Eingabe erfasst wird, und bei Eingabe eines Verfahrwunsches in der ersten Richtung die Abschalteinrichtung 24 solange schließen, solange über den Taster T eine entsprechende aktive Eingabe erfasst wird, da die zweite Umkehreinrichtung 121 stets in die erste Schaltstellung zurückgeschaltet worden ist.

Wie gestrichelt angedeutet, kann mithilfe der zweiten Umkehreinrichtung 121 in analoger Weise auch ein weiterer Verstellantrieb 100' zum Verstellen eines weiteren der Rotorblätter 14' von der Sicherheitssteuerung 130 kontrolliert werden.

In einer nicht dargestellten Abwandlung ist stattdessen eine weitere Umkehreinrichtung für den weiteren Verstellantrieb 100' vorgesehen, mithilfe der der weitere Verstellantrieb 100' zum Verstellen des weiteren Rotorblatts 14' von der Sicherheitssteuerung 130 in derselben Weise kontrolliert wird wie dies vorstehend für den ersten Verstellantrieb 100 und die zweite Umkehreinrichtung 121 (die in einer Ausführung dann nur für den ersten Verstellantrieb 100 zuständig ist) beschrieben wurde.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Windenergieanlage
- 11: Turm
- 12: Rotor
- 13: Nabe
- 14: erstes Rotorblatt
- 14': weiteres Rotorblatt
- 20-25: Abschalteinrichtung
- 100: erster Verstellantrieb
- 100': weiterer Verstellantrieb
- 110: Energiequelle
- 111: erste Umkehreinrichtung
- 112: Pitchregler
- 120: Energiespeicher
- 121: zweite Umkehreinreichung
- 130: Sicherheitssteuerung

- A1: erster Ausgang
- A2: zweiter Ausgang
- B: Pitch-Bremse
- E1: erster Eingang
- E2: zweiter Eingang
- L: Leitung
- S: Sensor
- T: Taster
- Z: Zeitverzögerungseinrichtung

## Patentansprüche

1. Windenergieanlage (10) mit
einem Rotor (12) mit einem ersten winkelverstellbaren Rotorblatt (14),
einem ersten Verstellantrieb (100) zum Verstellen des ersten Rotorblatts, und
einer ersten Umkehreinrichtung (111) zur Energieversorgung des ersten Verstellantriebs aus einer Energiequelle (110) über die erste Umkehreinrichtung zum Verstellen des ersten Rotorblatts in einer ersten Richtung und Energieversorgung des ersten Verstellantriebs aus der Energiequelle über die erste Umkehreinrichtung zum Verstellen des ersten Rotorblatts in einer zu der ersten Richtung gegensinnigen zweiten Richtung; gekennzeichent durch
eine Sicherheitssteuerung (130); und
eine zweite, durch die Sicherheitssteuerung umschaltbare Umkehreinrichtung (121) zur Energieversorgung des ersten Verstellantriebs aus einem Energiespeicher (120) in einem ersten Sonderbetriebsmodus über die zweite Umkehreinrichtung in einer ersten Schaltstellung zum Verstellen des ersten Rotorblatts in der ersten Richtung und Energieversorgung des ersten Verstellantriebs aus dem Energiespeicher in dem ersten Sonderbetriebsmodus über die zweite Umkehreinrichtung in einer zweiten Schaltstellung zum Verstellen des ersten Rotorblatts in der zweiten Richtung.

2. Windenergieanlage nach Anspruch 1, **gekennzeichnet durch** wenigstens eine, insbesondere durch die Sicherheitssteuerung kontrollierte, Abschalteinrichtung (24, 25) zum Unterbrechen der Energieversorgung des ersten Verstellantriebs über die zweite Umkehreinrichtung, insbesondere infolge eines Erreichens einer vorgegebenen Haltestellung oder eines vorgegebenen Haltebereichs des ersten Rotorblatts.

3. Windenergieanlage nach dem vorhergehenden Anspruch, **gekennzeichnet durch** eine Zeitverzögerungseinrichtung (Z), um zwischen einem Erfassen einer vorgegebenen Stellung des ersten Rotorblatts und dem Unterbrechen der Energieversorgung durch die Abschalteinrichtung wenigstens eine vorgegebene Wartezeit zu bewirken.

4. Windenergieanlage nach einem der vorhergehenden Ansprüche, **gekennzeichnet durch** wenigstens eine Leitung (L) zur Energieversorgung des ersten Verstellantriebs aus dem Energiespeicher über die erste Umkehreinrichtung in wenigstens einem weiteren Sonderbetriebsmodus.

5. Windenergieanlage nach einem der vorhergehenden Ansprüche, **gekennzeichnet durch** eine Pitch-Bremse (B) zum Halten des ersten Rotorblatts in einer aktuellen Stellung und einer Erfassungseinrichtung (S) zum Erfassen einer Abweichung zwischen einer aktuellen Stellung des ersten Rotorblatts und einer vorgegebenen Sollstellung, wobei die Sicherheitssteuerung dazu eingerichtet ist, das erste Rotorblatt mithilfe des aus dem Energiespeicher über die zweite Umkehreinrichtung versorgten Verstellantriebs in Richtung der Sollstellung zu verstellen, falls die Abweichung einen vorgegebenen Grenzwert überschreitet.

6. Windenergieanlage nach dem vorhergehenden Anspruch, **dadurch gekennzeichnet, dass** die Pitch-Bremse planmäßig bei einer auf das erste Rotorblatt wirkenden Last rutscht, welche geringer als eine in der Fahnenstellung auf das erste Rotorblatt wirkenden Maximallast ist, für die die Windenergieanlage ausgelegt ist.

7. Windenergieanlage nach einem der vorhergehenden Ansprüche, **dadurch gekennzeichnet, dass** die zweite Umkehreinrichtung in der ersten Schaltstellung einen ersten Eingang (E1) mit einem ersten Ausgang (A1) sowie einen zweiten Eingang (E2) mit einem zweiten Ausgang (A2) verbindet und in der zweiten Schaltstellung den ersten Eingang mit dem zweiten Ausgang sowie den zweiten Eingang mit dem ersten Ausgang verbindet; und/oder dass der erste Verstellantrieb wenigstens einen Elektromotor und der Energiespeicher wenigstens einen elektrischen Energiespeicher aufweist oder dass der erste Verstellantrieb wenigstens einen hydraulischen Aktuator und der Energiespeicher wenigstens einen Druckspeicher aufweist.

8. Windenergieanlage nach einem der vorhergehenden Ansprüche, **dadurch gekennzeichnet, dass** der Rotor wenigstens ein weiteres winkelverstellbares Rotorblatt (14') und einen weiteren Verstellantrieb (100') zum Verstellen dieses weiteren Rotorblatts aufweist, der über die zweite oder eine weitere Umkehreinrichtung mit Energie aus demselben oder einem weiteren Energiespeicher versorgbar ist.

9. Verfahren zum Betreiben einer Windenergieanlage (10) nach einem der vorhergehenden Ansprüche, wobei das erste Rotorblatt (14) bei Auftritt wenigstens eines Sonderbetriebs-, insbesondere Störfalls mithilfe des aus dem Energiespeicher (120) über die zweite Umkehreinrichtung (121) versorgten ersten Verstellantriebs (100) in einer ersten Betriebsart des ersten Sonderbetriebsmodus, in der die zweite Umkehreinrichtung durch die Sicherheitssteuerung (130) in die erste Schaltstellung geschaltet ist, in der ersten Richtung verstellt wird.

10. Verfahren nach dem vorhergehenden Anspruch, **dadurch gekennzeichnet, dass** das erste Rotorblatt in einer zweiten Betriebsart des ersten Sonderbetriebsmodus, in der die zweite Umkehreinrichtung durch die Sicherheitssteuerung in die zweite Schaltstellung geschaltet ist (S75), in der zu der ersten Richtung gegensinnigen zweiten Richtung verstellt wird.

11. Verfahren nach dem vorhergehenden Anspruch, **dadurch gekennzeichnet, dass** die Sicherheitssteuerung in dem ersten Sonderbetriebsmodus die zweite Umkehreinrichtung ein- oder mehrfach von der ersten in die zweite und/oder ein- oder mehrfach von der zweiten in die erste Schaltstellung umschaltet und/oder die zweite Umkehreinrichtung stets von der zweiten in die erste Schaltstellung zurückschaltet und/oder die Energieversorgung des ersten Verstellantriebs über die zweite Umkehreinrichtung in der ersten und/oder zweiten Betriebsart ein- oder mehrfach unterbricht, insbesondere bevor sie die zweite Umkehreinrichtung von der ersten in die zweite und/oder von der zweiten in die erste Schaltstellung umschaltet, und/oder im Falle eines Umschaltens der zweiten Umkehreinrichtung die Energieversorgung des ersten Verstellantriebs über die zweite Umkehreinrichtung erst aktiviert, nachdem die zweite Umkehreinrichtung umgeschaltet worden ist.

12. Verfahren nach einem der Ansprüche 9 bis 11, **dadurch gekennzeichnet, dass** der erste Sonderbetriebsmodus infolge, insbesondere während, einer Störung der Energieversorgung des ersten Verstellantriebs aus der Energiequelle über die erste Umkehreinrichtung, insbesondere einem Ausfall der Energiequelle und/oder einer Funktionsstörung der ersten Umkehreinrichtung, durchgeführt wird.

13. Verfahren nach einem der Ansprüche 9 bis 12, **dadurch gekennzeichnet, dass** eine Abweichung zwischen einer aktuellen Stellung des ersten Rotorblatts, in der eine Pitch-Bremse (B) zum Halten des Rotorblatts geschlossen ist, von einer vorgegebenen Sollstellung erfasst wird, wobei das erste Rotorblatt mithilfe des aus dem Energiespeicher über die zweite Umkehreinrichtung versorgten ersten Verstellantriebs in Richtung der Sollstellung verstellt wird (S130), falls die Abweichung einen vorgegebenen Grenzwert überschreitet.

14. Verfahren nach dem vorhergehenden Anspruch, **dadurch gekennzeichnet, dass** das erste Rotorblatt in der ersten Richtung verstellt wird, falls der Verstellweg von der aktuellen Stellung in die Sollstellung in der ersten Richtung kürzer als in der zweiten Richtung ist, und in der zweiten Richtung verstellt wird, falls der Verstellweg von der aktuellen Stellung in die Sollstellung in der zweiten Richtung kürzer als in der ersten Richtung ist.

15. Verfahren nach einem der Ansprüche 9 bis 14, **dadurch gekennzeichnet, dass** die Energieversorgung des ersten Verstellantriebs aus dem Energiespeicher abgeschaltet und auf Basis wenigstens eines reaktivierenden Aktivierungssignals wieder zugeschaltet wird, während der erste Sonderbetriebsmodus noch durchgeführt wird.

16. Computerprogrammprodukt mit einem Programmcode, der auf einem von einem Computer lesbaren Medium gespeichert ist, zur Durchführung eines Verfahrens nach einem der Ansprüche 9 bis 15.

## Claims

1. A wind energy installation (10) comprising:
a rotor (12) with a first rotor blade (14) which can be adjusted in terms of its angle,
a first adjustment drive (100) for adjusting the first rotor blade, and
a first reversing device (111) for supplying energy to the first adjustment drive from a source of energy (110) via the first reversing device in order to adjust the first rotor blade in a first direction and for supplying energy to the first adjustment drive from the source of energy via the first reversing device in order to adjust the first rotor blade in a second direction which is opposite to the first direction;
**characterised by**
a safety control device / system (130); and
a second reversing device (121), which can be switched over by means of the safety control device / system, for supplying energy to the first adjustment drive from an energy storage device (120) in a first special mode of operation via the second reversing device in a first switching position in order to adjust the first rotor blade in the first direction and for supplying energy to the first adjustment drive from the energy storage device in the first special mode of operation via the second reversing device in a second switching position in order to adjust the first rotor blade in the second direction.

2. The wind energy installation as claimed in claim 1, **characterised by** at least one switching off device (24, 25), in particular at least one switching off device (24, 25) which is controlled by the safety control device / system, for interrupting the supply of energy to the first adjustment drive via the second reversing device, in particular as a result of a predetermined stopping position or a predetermined stopping region of the first rotor blade having been reached.

3. The wind energy installation as claimed in the preceding claim, **characterised by** a time delay device (Z), for causing at least a predetermined waiting time between a detection of a predetermined position of the first rotor blade and the interruption of the supply of energy by means of the switching off device.

4. The wind energy installation as claimed in any one of the preceding claims, **characterised by** at least one line (L) for supplying energy to the first adjustment drive from the energy storage device via the first reversing device in at least one further special mode of operation.

5. The wind energy installation as claimed in any one of the preceding claims, **characterised by** a pitch brake (B) for holding the first rotor blade in a current position and a detection device (S) for detecting a deviation between a current position of the first rotor blade and a predetermined target position, wherein the safety control device / system is set up to adjust the first rotor blade in the direction of the target position with the aid of the adjustment drive supplied with energy from the energy storage device via the second reversing device if the deviation exceeds a predetermined threshold value.

6. The wind energy installation as claimed in the preceding claim, **characterised in that** the pitch brake slips, according to plan, at a load acting on the first rotor blade which is smaller than a maximum load which acts on the first rotor blade in the feathered position and for which the wind energy installation is constructed.

7. The wind energy installation as claimed in any one of the preceding claims, **characterised in that** the second reversing device connects a first input (E1) to a first output (A1) as well as a second input (E2) to a second output (A2) in the first switching position, and **in that** it connects the first input to the second output as well as the second input to the first output in the second switching position; and / or **in that** the first adjustment drive comprises at least one electric motor and the energy storage device comprises at least one electrical energy storage device, or **in that** the first adjustment drive comprises at least one hydraulic actuator and the energy storage device comprises at least one pressure accumulator.

8. The wind energy installation as claimed in any one of the preceding claims, **characterised in that** the rotor has at least one further rotor blade (14') which can be adjusted in terms of its angle, and a further adjustment drive (100') for adjusting this further rotor blade, which further adjustment drive (100') can be supplied with energy from the same energy storage device or from a further energy storage device via the second reversing device or via a further reversing device.

9. A method of operating a wind energy installation (10) as claimed in any one of the preceding claims, wherein, in the event that at least one special operating case should occur, in particular in the event that at least one malfunction case should occur, the first rotor blade (14) is adjusted in the first direction with the aid of the first adjustment drive (100) which is supplied with energy from the energy storage device (120) via the second reversing device (121) in a first mode of operation of the first special mode of operation, in which the second reversing device is switched to the first switching position by means of the safety control device / system (130).

10. The method as claimed in the preceding claim, **characterised in that**, in a second mode of operation of the first special mode of operation, in which the second reversing device is switched to the second switching position by means of the safety control device / system (S75), the first rotor blade is adjusted in the second direction which is opposite to the first direction.

11. The method as claimed in the preceding claim, **characterised in that**, in the first special mode of operation, the safety control device / system switches the second reversing device one or more times over from the first to the second switching position and / or one or more times from the second to the first switching position, and / or **in that**, in the first special mode of operation, the safety control device / system always switches the second reversing device back from the second to the first switching position, and / or **in that**, in the first special mode of operation, the safety control device / system interrupts the supply of energy to the first adjustment drive via the second reversing device one or more times in the first mode of operation and / or in the second mode of operation, in particular before it switches the second reversing device over from the first switching position to the second switching position and / or from the second switching position to the first switching position, and / or **in that**, in the first special mode of operation, in the case of a switchover of the second reversing device, the safety control device / system does not activate the supply of energy to the first adjustment drive via the second reversing device until after the second reversing device has been switched over.

12. The method as claimed in any one of the claims 9 to 11, **characterised in that** the first special mode of operation is carried out as a result of a malfunction in the supply of energy to the first adjustment drive from the source of energy via the first reversing device, in particular during a malfunction in the supply of energy to the first adjustment drive from the source of energy via the first reversing device, in particular as a result of a failure of the source of energy and / or a functional malfunction of the first reversing device.

13. The method as claimed in any one of the claims 9 to 12, **characterised in that** a deviation between a current position of the first rotor blade, in which a pitch brake (B) is closed in order to hold the rotor blade, and a predetermined target position is detected, wherein, if the deviation exceeds a predetermined threshold value, the first rotor blade is adjusted in the direction of the target position (S130) with the aid of the first adjustment drive which is supplied with energy from the energy storage device via the second reversing device.

14. The method as claimed in the preceding claim, **characterised in that** the first rotor blade is adjusted in the first direction if the adjustment path from the current position to the target position is shorter in the first direction than in the second direction, and **in that** the first rotor blade is adjusted in the second direction if the adjustment path from the current position to the target position is shorter in the second direction than in the first direction.

15. The method as claimed in any one of the claims 9 to 14, **characterised in that** the supply of energy to the first adjustment drive from the energy storage device is disconnected and, on the basis of at least one reactivating activation signal, is reconnected while the first special mode of operation is still being carried out.

16. A computer program product comprising a program code which is stored on a computer readable medium, for carrying out a method as claimed in any one of the claims 9 to 15.

## Revendications

1. Eolienne (10) avec
un rotor (12) avec une première pale de rotor (14) à angle de calage,
un premier entraînement de calage (100) pour le calage de la première pale de rotor, et
un premier dispositif d'inversion (111) pour l'alimentation en énergie du premier entraînement de calage d'une source d'énergie (110) par le biais du premier dispositif d'inversion pour le calage de la première pale de rotor dans un premier sens et l'alimentation en énergie du premier entraînement de calage de la source d'énergie par le biais du premier dispositif d'inversion pour le calage de la première pale de rotor dans un second sens opposé au premier sens ; **caractérisée par**
une commande de sécurité (130) ; et
un second dispositif d'inversion (121) commutable par la commande de sécurité pour l'alimentation en énergie du premier entraînement de calage d'un accumulateur d'énergie (120) dans un premier mode de fonctionnement spécial par le biais du second dispositif d'inversion dans une première position de commutation pour le calage de la première pale de rotor dans le premier sens et l'alimentation en énergie du premier entraînement de calage de l'accumulateur d'énergie dans le premier mode de fonctionnement spécial par le biais du second dispositif d'inversion dans une seconde position de commutation pour le calage de la première pale de rotor dans le second sens.

2. Eolienne selon la revendication 1, **caractérisée par** au moins un dispositif d'arrêt (24, 25) contrôlé en particulier par la commande de sécurité pour l'interruption de l'alimentation en énergie du premier entraînement de calage par le biais du second dispositif d'inversion, en particulier suite à une atteinte d'une position de retenue prédéfinie ou d'une zone de retenue prédéfinie de la première pale de rotor.

3. Eolienne selon la revendication précédente, **caractérisée par** un dispositif de retard de temps (Z) afin de provoquer au moins un temps d'attente prédéfini entre une détection d'une position prédéfinie de la première pale de rotor et l'interruption de l'alimentation en énergie par le dispositif d'arrêt.

4. Eolienne selon l'une quelconque des revendications précédentes, **caractérisée par** au moins une conduite (L) pour l'alimentation en énergie du premier entraînement de calage de l'accumulateur d'énergie par le biais du premier dispositif d'inversion dans au moins un autre mode de fonctionnement spécial.

5. Eolienne selon l'une quelconque des revendications précédentes, **caractérisée par** un frein de calage (B) pour le maintien de la première pale de rotor dans une position actuelle et d'un dispositif de détection (S) pour la détection d'un écart entre une position actuelle de la première pale de rotor et une position de consigne prédéfinie, dans laquelle la commande de sécurité est conçue afin de caler la première pale de rotor à l'aide de l'entraînement de calage alimentée depuis l'accumulateur d'énergie par le biais du second dispositif d'inversion en direction de la position de consigne, au cas où l'écart dépasse une valeur limite prédéfinie.

6. Eolienne selon la revendication précédente, **caractérisée en ce que** le frein de calage patine comme prévu en cas de charge agissant sur la première pale de rotor qui est inférieure à une charge maximale agissant en mise en drapeau sur la première pale de rotor, pour laquelle l'éolienne est conçue.

7. Eolienne selon l'une quelconque des revendications précédentes, **caractérisée en ce que** le second dispositif d'inversion dans la première position de commutation relie une première entrée (E1) à une première sortie (A1) ainsi qu'une seconde entrée (E2) à une seconde sortie (A2) et relie dans la seconde position de commutation la première entrée à la seconde sortie ainsi que la seconde entrée à la première sortie ; et/ou **en ce que** le premier entraînement de calage présente au moins un moteur électrique et l'accumulateur d'énergie présente au moins un accumulateur d'énergie électrique ou **en ce que** le premier entraînement de calage présente au moins un actionneur hydraulique et l'accumulateur d'énergie présente au moins un accumulateur de pression.

8. Eolienne selon l'une quelconque des revendications précédentes, **caractérisée en ce que** le rotor présente au moins une autre pale de rotor (14') à angle de calage et un autre entraînement de calage (100') pour le calage de cette autre pale de rotor qui peut être alimentée par le biais du second ou d'un autre dispositif d'inversion en énergie du même ou d'un autre accumulateur d'énergie.

9. Procédé de fonctionnement d'une éolienne (10) selon l'une quelconque des revendications précédentes, dans lequel la première pale de rotor (14) est calée dans le premier sens lors de la survenue au moins d'un cas de fonctionnement spécial, en particulier de panne à l'aide du premier entraînement de calage (100) alimenté de l'accumulateur d'énergie (120) par le biais du second dispositif d'inversion (121) dans un premier mode de fonctionnement du premier mode de fonctionnement spécial, dans lequel le second dispositif d'inversion est commuté par la commande de sécurité (130) dans la première position de commutation.

10. Procédé selon la revendication précédente, **caractérisé en ce que** la première pale de rotor est calée dans un second mode de fonctionnement du premier mode de fonctionnement spécial, dans lequel le second dispositif d'inversion est commuté par la commande de sécurité dans la seconde position de commutation (S75), dans le second sens opposé au premier sens.

11. Procédé selon la revendication précédente, **caractérisé en ce que** la commande de sécurité dans le premier mode de fonctionnement spécial commute le second dispositif d'inversion une ou plusieurs fois de la première dans la seconde et/ou une ou plusieurs fois de la seconde dans la première position de commutation et/ou recommute le second dispositif d'inversion toujours de la seconde dans la première position de commutation et/ou interrompt une ou plusieurs fois l'alimentation en énergie du premier entraînement de calage par le biais du second dispositif d'inversion dans le premier et/ou second mode de fonctionnement, en particulier avant qu'il ne commute le second dispositif d'inversion de la première dans la seconde et/ou de la seconde dans la première position de commutation, et/ou dans le cas d'une commutation du second dispositif d'inversion n'active l'alimentation en énergie du premier entraînement de calage par le biais du second dispositif d'inversion qu'après que le second dispositif d'inversion a été commuté.

12. Procédé selon l'une quelconque des revendications 9 à 11, **caractérisé en ce que** le premier mode de fonctionnement spécial est réalisé à la suite, en particulier pendant, une panne de l'alimentation en énergie du premier entraînement de calage de la source d'énergie par le biais du premier dispositif d'inversion, en particulier une défaillance de la source d'énergie et/ou un dysfonctionnement du premier dispositif d'inversion.

13. Procédé selon l'une quelconque des revendications 9 à 12, **caractérisé en ce qu'**un écart entre une position actuelle de la première pale de rotor, dans laquelle un frein de calage (B) est fermé pour le maintien de la pale de rotor, et une position de consigne prédéfinie est détecté, dans lequel la première pale de rotor est calée à l'aide du premier entraînement de calage alimenté de l'accumulateur d'énergie par le biais du second dispositif d'inversion en direction de la position de consigne (S130) au cas où l'écart dépasse une valeur limite prédéfinie.

14. Procédé selon la revendication précédente, **caractérisé en ce que** la première pale de rotor est calée dans le premier sens au cas où la voie de calage de la position actuelle dans la position de consigne dans le premier sens est plus courte que dans le second sens, et est calée dans le second sens au cas où la voie de calage de la position actuelle dans la position de consigne dans le second sens est plus courte que dans le premier sens.

15. Procédé selon l'une quelconque des revendications 9 à 14, **caractérisé en ce que** l'alimentation en énergie du premier entraînement de calage de l'accumulateur d'énergie est arrêtée et est remise en marche sur la base d'au moins un signal d'activation de réactivation pendant que le premier mode de fonctionnement spécial est encore réalisé.

16. Produit de programme informatique avec un code de programme qui est enregistré sur un support lisible par un ordinateur, pour la réalisation d'un procédé selon l'une quelconque des revendications 9 à 15.
